# EUROPÄISCHE PATENTSCHRIFT

(11) **EP 3 464 002 B1**
(45) Veröffentlichungstag und Bekanntmachung des Hinweises auf die Patenterteilung: **04.09.2024**
(21) Anmeldenummer: 17730067.0
(22) Anmeldetag: 24.05.2017
(51) Int. Cl.: B60W 30/09

(54) **VERFAHREN ZUR VERMEIDUNG EINER KOLLISION EINES KRAFTFAHRZEUGS MIT EINEM OBJEKT AUF GRUNDLAGE EINES MAXIMAL VORGEBBAREN RADLENKWINKELS, FAHRERASSISTENZSYSTEM SOWIE KRAFTFAHRZEUG**
METHOD FOR AVOIDING A COLLISION OF A MOTOR VEHICLE WITH AN OBJECT ON THE BASIS OF A MAXIMUM PRESCRIBABLE WHEEL STEERING ANGLE, DRIVER ASSISTANCE SYSTEM AND MOTOR VEHICLE
PROCÉDÉ POUR ÉVITER UNE COLLISION D'UN VÉHICULE AUTOMOBILE AVEC UN OBJET SUR LA BASE D'IN ANGLE DE DIRECTION DE ROUE MAXIMALE PRÉDÉTERMINABLE, SYSTÈME D'ASSISTANCE À LA CONDUITE ET VÉHICULE AUTMOBILE

(30) Priorität: 30.05.2016 DE 102016109856
(43) Veröffentlichungstag der Anmeldung: 10.04.2019
(73) Patentinhaber: Valeo Schalter und Sensoren GmbH, 74321 Bietigheim-Bissingen (DE)
(72) Erfinder: GUECHAI, Wael, 74321 Bietigheim-Bissingen (DE); MARASLIS, Christos, 74321 Bietigheim-Bissingen (DE); SATTLER, Stefanie, 74321 Bietigheim-Bissingen (DE)
(74) Vertreter: Pothmann, Karsten
(86) Internationale Anmeldenummer: PCT/EP2017/062533
(87) Internationale Veröffentlichungsnummer: WO 2017/207384

(56) Entgegenhaltungen:
- DE-A1- 102005 023 832
- DE-A1- 102011 100 615
- DE-A1- 102012 008 660
- DE-A1- 102012 010 130
- DE-A1- 102013 223 377

## Beschreibung

Die vorliegende Erfindung betrifft ein Verfahren zur Vermeidung einer Kollision eines Kraftfahrzeugs mit einem Objekt, bei welchem das Objekt in einer Umgebung des Kraftfahrzeugs erfasst wird, eine relative Lage zwischen dem Kraftfahrzeug und dem Objekt bestimmt wird und in Abhängigkeit von der relativen Lage zwischen dem Kraftfahrzeug und dem Objekt zumindest eine kollisionsvermeidende Maßnahme bestimmt wird. Darüber hinaus betrifft die vorliegende Erfindung ein Fahrerassistenzsystem für ein Kraftfahrzeug. Schließlich betrifft die Erfindung ein Kraftfahrzeug mit einem solchen Fahrerassistenzsystem.

Vorliegend richtet sich das Interesse auf Fahrerassistenzsysteme, welche dazu ausgelegt sind, einen Fahrer des Kraftfahrzeugs beim Führen des Kraftfahrzeugs zu unterstützen. Ein solches Fahrerassistenzsystem kann beispielsweise zur Vermeidung einer Kollision des Kraftfahrzeugs mit einem Objekt auf einer Fahrbahn des Kraftfahrzeugs dienen. Dazu kann das Fahrerassistenzsystem beispielsweise als automatisches Notbremssystem ausgebildet sein, welches das Kraftfahrzeug bei einer drohenden Kollision mit dem Objekt automatisch abbremst. Ferner sind Fahrerassistenzsysteme bekannt, welche in die Lenkung eingreifen, so dass dem Objekt ausgewichen werden kann.

Weiterhin ist es aus dem Stand der Technik bekannt, eine Kollisionsgefahr zu bestimmen, welche eine mögliche Kollision zwischen dem Kraftfahrzeug und dem Objekt beschreibt. In Abhängigkeit davon können kollisionsvermeidende Maßnahmen eingeleitet werden, um die Kollision zu verhindern oder um die Schwere der Kollision zu mindern. Solche kollisionsvermeidenden Maßnahmen können beispielsweise Bremseingriffe, Warnungen, aktive Lenkeingriffe oder passive Lenkaufforderungen sein.

Bisher werden bei bekannten Verfahren zur Kollisionsvermeidung üblicherweise nur Objekte betrachtet, die sich in einem Fahrschlauch befinden. Ein solcher Fahrschlauch beschreibt beispielsweise einen Bereich auf der Fahrbahn, den das Kraftfahrzeug zukünftig einnehmen wird. Der Fahrschlauch kann in Abhängigkeit von einem aktuellen Lenkwinkel des Kraftfahrzeugs bestimmt werden. Dabei werden üblicherweise nur Objekte in dem Fahrschlauch betrachtet, die eine direkte Kollisionsgefahr darstellen.

Hierzu beschreibt die EP 2 887 335 A1 ein Verfahren zum Warnen eines Fahrers eines Kraftfahrzeugs vor einer Kollisionsgefahr durch Ausgeben eines nicht-optischen Warnsignals. Insbesondere kann ein akustisches und/oder ein haptisches Warnsignal ausgegeben werden. Hierbei wird ein aktueller Lenkwinkel des Kraftfahrzeugs erfasst und abhängig von dem aktuellen Lenkwinkel und insbesondere unter Berücksichtigung von Fahrzeugabmessungen kann dann ein virtueller Fahrschlauch bestimmt werden. Wenn sich ein Objekt in diesem virtuellen Fahrschlauch befindet, kann die nicht-optische Warnung ausgegeben werden.

Darüber hinaus beschreibt die EP 2 087 478 B1 ein Verfahren zur Kollisionsvermeidung von Fahrzeugen mit Objekten. Hierbei erfolgt eine Messung des Abstands von außerhalb des Fahrzeugs angeordneten Objekten zu am Fahrzeug angeordneten Sensoren. Darüber hinaus wird ein Fahrweg basierend auf der aktuellen Geschwindigkeit des Kraftfahrzeugs und der Lenkrichtung bestimmt. Ferner wird bestimmt, ob das Fahrzeug mit einem durch die Sensoren detektieren Objekt bei dem vorgegebenen Fahrweg kollidiert. Falls eine Kollision droht, kann eine entsprechende Anzeige im Fahrzeug ausgegeben werden.

Aus der DE 10 2005 023 832 A1 ist ein Verfahren zur Vermeidung einer Kollision eines Kraftfahrzeugs mit einem Objekt bekannt, wobei eine Kollisionszustandskarte erstellt wird. Anhand der Kollisionszustandskarte wird entschieden, ob ein Feedbacksignal an den Fahrer ausgegeben wird.

Es ist Aufgabe der vorliegenden Erfindung, eine Lösung aufzuzeigen, wie eine Kollision zwischen einem Kraftfahrzeug und einem Objekt zuverlässiger verhindert werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche.

Bei einer Ausführungsform eines Verfahrens zur Vermeidung einer Kollision eines Kraftfahrzeugs mit einem Objekt wird das Objekt in einer Umgebung des Kraftfahrzeugs erfasst. Zudem wird bevorzugt eine relative Lage zwischen dem Kraftfahrzeug und dem Objekt bestimmt. Ferner wird insbesondere in Abhängigkeit von der relativen Lage zwischen dem Kraftfahrzeug und dem Objekt zumindest eine kollisionsvermeidende Maßnahme bestimmt. Darüber hinaus wird bevorzugt ein maximal vorgebbarer Radlenkwinkelbereich bestimmt. Ferner wird bevorzugt in dem vorgebbaren Radlenkwinkelbereich anhand der relativen Lage zwischen dem Kraftfahrzeug und dem Objekt ein blockierter Radlenkwinkelbereich, für welchen die Kollision mit dem Objekt droht und vermeidbar ist und ein Warnradlenkwinkelbereich, für welchen keine Kollision mit dem Objekt droht und welcher an den blockierten Radlenkwinkelbereich angrenzt, bestimmt. Ferner wird bevorzugt für den blockierten Radlenkwinkelbereich eine erste kollisionsvermeidende Maßnahme und für den Warnradlenkwinkelbereich eine zweite kollisionsvermeidende Maßnahme bestimmt.

Bei einem erfindungsgemäßen Verfahren zur Vermeidung einer Kollision eines Kraftfahrzeugs mit einem Objekt wird das Objekt in einer Umgebung des Kraftfahrzeugs erfasst. Zudem wird eine relative Lage zwischen dem Kraftfahrzeug und dem Objekt bestimmt und in Abhängigkeit von der relativen Lage zwischen dem Kraftfahrzeug und dem Objekt wird zumindest eine kollisionsvermeidende Maßnahme bestimmt. Darüber hinaus wird ein maximal vorgebbarer Radlenkwinkelbereich bestimmt. Des Weiteren werden in dem maximal vorgebbaren Radlenkwinkelbereich anhand der relativen Lage zwischen dem Kraftfahrzeug und dem Objekt ein blockierter Radlenkwinkelbereich, für welchen die Kollision mit dem Objekt droht und vermeidbar ist, und ein Warnradlenkwinkelbereich, für welchen keine Kollision mit dem Objekt droht und welcher an den blockierten Radlenkwinkelbereich angrenzt, bestimmt. Für den blockierten Radlenkwinkelbereich wird eine erste kollisionsvermeidende Maßnahme und für den Warnradlenkwinkelbereich wird eine zweite kollisionsvermeidende Maßnahme bestimmt.

Mit Hilfe des Verfahrens soll eine Kollision zwischen dem Kraftfahrzeug und dem Objekt verhindert werden oder zumindest eine Schwere der Kollision vermindert werden. In der Umgebung des Kraftfahrzeugs wird hierzu zumindest ein Objekt erfasst. Dies kann beispielsweise mit entsprechenden Sensoren des Kraftfahrzeugs, beispielsweise Ultraschallsensoren, Radarsensoren, Laserscannern, Lidar-Sensoren oder Kameras erfolgen. Hierbei ist es beispielsweise auch möglich, dass die erfassten Objekte in eine digitale Umgebungskarte eingetragen werden, welche die Umgebung des Kraftfahrzeugs beschreiben. Somit kann die relative Lage zwischen dem Kraftfahrzeug und dem Objekt bestimmt werden. Zudem kann die relative Lage zwischen dem Kraftfahrzeug und dem Objekt während der Bewegung bzw. während der Fahrt des Kraftfahrzeugs bestimmt werden. Anhand der relativen Lage kann dann überprüft werden, ob eine Kollision zwischen dem Kraftfahrzeug und dem Objekt droht. Dies ist beispielsweise der Fall, wenn ein Abstand zwischen dem Kraftfahrzeug und dem Objekt einen vorbestimmten Mindestabstand unterschreitet. Falls eine drohende Kollision zwischen dem Kraftfahrzeug und dem Objekt erkannt wurde, kann die kollisionsvermeidende Maßnahme eingeleitet werden. Mit Hilfe dieser kollisionsvermeidenden Maßnahme kann dann versucht werden die Kollision zu verhindern.

Erfindungsgemäß ist es nun vorgesehen, dass ein maximal vorgebbarer Radlenkwinkelbereich bestimmt wird. Hierzu werden die beidseitigen Radlenkwinkel bestimmt, die bei der aktuellen Fahrsituation des Kraftfahrzeugs maximal vorgegeben werden können. Der maximale Radlenkwinkel beschreibt die Auslenkungen der lenkbaren Räder des Kraftfahrzeugs. Durch Vorgeben der Radlenkwinkel kann mit dem Kraftfahrzeug eine Kurvenfahrt durchgeführt werden. Dabei entsprechen die maximal vorgebbaren Radlenkwinkel für die beiden Seiten, also für eine Drehung im Uhrzeigersinn und für eine Drehung gegen den Uhrzeigersinn, nicht den maximal möglichen Radlenkwinkeln. Anders ausgedrückt sind die maximal vorgebbaren Radlenkwinkel zwangsläufig diejenigen Radlenkwinkel, welche sich bei vollem Lenkeinschlag in die jeweilige Richtung einstellen und durch welche der Wendekreis des Kraftfahrzeugs als die kleinstmögliche Kreisbahn definiert wird. Die maximal vorgebbaren Radlenkwinkel sind vielmehr diejenigen Radlenkwinkel, welche beispielsweise unter Berücksichtigung einer aktuellen Geschwindigkeit des Kraftfahrzeugs für das Kraftfahrzeug momentan durchführbar und zulässig sind. Der maximale vorgebbare Radlenkwinkelbereich beschreibt den Bereich zwischen den beiden maximal vorgebbaren Radlenkwinkeln.

Anhand dieses maximal vorgebbaren Radlenkwinkelbereichs und der relativen Lage zwischen dem Kraftfahrzeug und dem Objekt wird nun der maximal vorgebbare Radlenkwinkelbereich näher definiert. In dem maximal vorgebbaren Radlenkwinkelbereich wird ein blockierter Radlenkwinkelbereich bestimmt. Dieser blockierte Radlenkwinkelbereich beschreibt diejenigen Radlenkwinkel, bei deren Einstellung eine Kollision mit dem Objekt droht. Falls der aktuelle Radlenkwinkel des Kraftfahrzeugs also in diesem blockierten Radlenkwinkelbereich liegt, wird eine Kollision mit dem Objekt stattfinden, wenn keine kollisionsvermeidende Maßnahme durchgeführt wird. Beispielsweise kann die Kollision mit dem Objekt durch einen Lenkeingriff oder eine Bremsung verhindert werden. Der blockierte Radlenkwinkelbereich kann denjenigen Bereich beschreiben, in welchem die Kollision zwischen dem Kraftfahrzeug und dem Objekt noch vermieden werden kann. Insbesondere kann dieser blockierte Radlenkwinkelbereich einen Bereich beschreiben, in welchem die Kollision durch Einstellen des maximal vorgebbaren Lenkwinkels verhindert werden kann. Zudem kann in dem maximal vorgebbaren Radlenkwinkelbereich ein freier Radlenkwinkelbereich bestimmt werden, für den keine Kollision mit dem Objekt droht. Falls der aktuelle Radlenkwinkel des Kraftfahrzeugs also in dem freien Radlenkwinkelbereich liegt, wird mit hoher Wahrscheinlichkeit keine Kollision mit dem Objekt erfolgen. Zwischen dem freien Radlenkwinkelbereich und dem blockierten Radlenkwinkelbereich wird ein Warnradlenkwinkelbereich bestimmt. Für Radlenkwinkel, welche in diesem Warnradlenkwinkelbereich liegen, droht keine Kollision zwischen dem Kraftfahrzeug und dem Objekt. Der Warnradlenkwinkelbereich beschreibt beispielsweise Radlenkwinkel, bei deren Einstellung sehr nahe an dem Objekt vorbeigefahren wird. Wenn sich der aktuelle Radlenkwinkel in dem Warnradlenkwinkelbereich befindet, kann eine sehr geringe Änderung des Radlenkwinkels bzw. des Lenkwinkels zu einer Kollision mit dem Objekt führen.

Im Vergleich zum Stand der Technik werden also hier nicht die aktuellen bzw. tatsächlichen Radlenkwinkel sondern fest vorgegebene Radlenkwinkelbereiche herangezogen, um eine Kollisionsgefahr zu bestimmen. Weiterhin ist es vorgesehen, dass für den blockierten Radlenkwinkelbereich eine erste kollisionsvermeidende Maßnahme und für den Warnradlenkwinkelbereich eine zweite kollisionsvermeidende Maßnahme bestimmt wird. Insbesondere unterscheidet sich die erste kollisionsvermeidende Maßnahme von der zweiten kollisionsvermeidenden Maßnahme. Somit kann beispielsweise erreicht werden, dass die Kollision zwischen dem Kraftfahrzeug und dem Objekt verhindert wird, falls sich der aktuelle Radlenkwinkel in dem blockierten Radlenkwinkelbereich befindet. Falls sich der aktuelle Radlenkwinkel in dem Warnradlenkwinkelbereich befindet, kann der Fahrer des Kraftfahrzeugs darauf hingewiesen werden, dass eine Radlenkwinkeländerung in den blockierten Radlenkwinkelbereich zu einer Kollision mit dem Objekt führen wird.

Bevorzugt wird der maximal vorgebbare Radlenkwinkelbereich anhand einer vorbestimmten Reaktionszeit und/oder anhand einer aktuellen Geschwindigkeit des Kraftfahrzeugs bestimmt. Der maximal vorgebbare Radlenkwinkelbereich beschreibt insbesondere den Bereich für die Radlenkwinkel, welche bei der aktuellen Fahrsituation des Kraftfahrzeugs eingestellt werden können. Zur Bestimmung des maximal vorgebbaren Radlenkwinkelbereichs kann eine vorbestimmte Reaktionszeit eines Fahrers des Kraftfahrzeugs herangezogen werden. Die Reaktionszeit kann auch eine Reaktionszeit des Fahrerassistenzsystems beschreiben. Die Reaktionszeit beschreibt die zeitliche Dauer zwischen dem Erkennen des Objekts und dem Beginn einer kollisionsvermeidenden Maßnahme. Hierzu kann auch die aktuelle Fahrtrichtung des Kraftfahrzeugs herangezogen werden und ein entsprechender Fahrschlauch bestimmt werden, welcher die zukünftige Bewegung des Kraftfahrzeugs beschreibt. Zur Bestimmung des maximal vorgebbaren Radlenkwinkelbereichs kann auch bestimmt werden, welchen virtuellen Objekten in diesem Fahrschlauch unter Berücksichtigung der Reaktionszeit noch ausgewichen werden kann. Weiterhin kann der maximal vorgebbare Radlenkwinkelbereich anhand der aktuellen Geschwindigkeit des Kraftfahrzeugs bestimmt werden. Beispielsweise kann der maximal vorgebbare Radlenkwinkelbereich so definiert werden, dass die Fahrstabilität garantiert bleibt. Dies ermöglicht eine zuverlässige Bestimmung des maximal vorgebbaren Radlenkwinkelbereichs.

In einer Ausführungsform wird als die erste kollisionsvermeidende Maßnahme eine Bremsung und/oder ein Lenkeingriff bestimmt und die erste kollisionsvermeidende Maßnahme wird eingeleitet, falls ein aktueller Radlenkwinkel in dem blockierten Radlenkwinkelbereich liegt. Falls der aktuelle Radlenkwinkel in dem vorbestimmten blockierten Radlenkwinkelbereich liegt und/oder eine Kollision durch Einstellen eines maximal vorgebbaren Radlenkwinkels verhindert werden kann, kann die erste kollisionsvermeidende Maßnahme eingeleitet werden. Bei der ersten kollisionsvermeidenden Maßnahme kann die Bremse des Kraftfahrzeugs aktiviert werden oder es kann ein Eingriff in die Lenkung vorgenommen werden. Dabei kann die Bremskraft in Abhängigkeit von der aktuellen Geschwindigkeit des Kraftfahrzeugs und/oder der relativen Lage zwischen dem Kraftfahrzeug und dem Objekt angepasst werden. Somit kann beispielsweise erreicht werden, dass das Kraftfahrzeug vor dem Objekt vollständig abgebremst wird und somit die Kollision verhindert wird. Alternativ oder zusätzlich kann so in die Lenkung des Kraftfahrzeugs eingegriffen werden, dass sich der aktuelle Radlenkwinkel in dem freien Radlenkwinkelbereich oder dem Warnlenkwinkelbereich befindet. In dem blockierten Radlenkwinkelbereich kann eine Kollision zwischen dem Kraftfahrzeug und dem Objekt beispielsweise durch einen entsprechenden Lenkeingriff, insbesondere durch Einstellen des maximal vorgebbaren Radlenkwinkels, verhindert werden. In diesem Fall ist es nicht notwendig, eine Bremsung einzuleiten. Somit kann bei Fahrsituationen, bei denen ein Ausweichmanöver möglich ist, auf die Bremsung bzw. Notbremsung verzichtet werden. Damit kann die Gefahr von Auffahrunfällen vermindert werden.

Gemäß der Erfindung wird die zweite kollisionsvermeidende Maßnahme eingeleitet, falls der aktuelle Radlenkwinkel in dem Warnradlenkwinkelbereich liegt. Wenn sich der aktuelle Radlenkwinkelbereich in dem Warnradlenkwinkelbereich befindet, kann eine Maßnahme zur Prävention der Kollision durchgeführt werden. Beispielsweise kann eine Maßnahme durchgeführt werden, welche den Fahrer dazu veranlasst, nicht in den blockierten Radlenkwinkelbereich zu lenken. Auf diese Weise kann der Fahrer rechtzeitig auf eine mögliche Kollision mit dem Objekt hingewiesen werden.

In einer weiteren Ausführungsform wird als die zweite kollisionsvermeidende Maßnahme ein Lenkhinweis an den Fahrer des Kraftfahrzeugs ausgegeben. Die Warnung und/oder die zweite kollisionsvermeidende Maßnahme kann einen Lenkhinweis an den Fahrer des Kraftfahrzeugs umfassen. Beispielsweise kann dem Fahrer angezeigt werden, wie er das Lenkrad des Kraftfahrzeugs betätigen soll, um eine mögliche Kollision zwischen dem Kraftfahrzeug und dem Objekt zu vermeiden. Diese kollisionsvermeidende Maßnahme eignet sich insbesondere bei einem verhältnismäßig großen Abstand zu dem Objekt oder einer geringen Entfernung zu dem blockierten Radlenkwinkelbereich. Somit kann der Fahrer frühzeitig auf eine mögliche Kollision mit dem Objekt hingewiesen werden. In diesem Fall kann noch kein Eingriff in die Lenkung erfolgen, so dass der Fahrer nicht durch den Lenkeingriff durch das Fahrerassistenzsystem verunsichert wird.

Gemäß der Erfindung wird innerhalb des Warnradlenkwinkelbereichs eine von dem Fahrer durchgeführte Lenkbewegung erfasst und falls die erfasst Lenkbewegung in Richtung des blockierten Radlenkwinkelbereichs gerichtet ist, als die zweite kollisionsvermeidende Maßnahme ein Eingriff in ein Lenkeingriff durchgeführt, welcher entgegengesetzt zu der Lenkbewegung gerichtet ist. Wenn sich der aktuelle Radlenkwinkel in dem Warnlenkwinkelbereich befindet, kann mit Hilfe von entsprechenden Sensoren, beispielsweise einem Lenkwinkelsensor, eine von dem Fahrer durchgeführte Lenkbewegung erfasst werden. Fall diese Lenkbewegung in Richtung des blockierten Radlenkwinkelbereichs führt, kann mit Hilfe des Fahrerassistenzsystems aktiv ein Eingriff in die Lenkung vorgenommen werden. Beispielsweise kann über die Lenkung ein Moment in eine dem blockierten Radlenkwinkelbereich abgewandte Richtung bereitgestellt werden. Wenn der Fahrer also in Richtung des blockierten Radlenkwinkelbereichs lenkt, kann derart in die Lenkung eingegriffen werden, dass der Fahrer das Kraftfahrzeug nicht in den blockierten Radlenkwinkelbereich lenken kann.

Bevorzugt wird eine Intensität des Lenkeingriffs in Abhängigkeit von einer Entfernung des Kraftfahrzeug zu dem blockierten Radlenkwinkelbereich, eines bei der Lenkbewegung aufgebrachten Lenkmoments und/oder der aktuellen Geschwindigkeit des Kraftfahrzeugs bestimmt. Durch den Lenkeingriff kann dem Fahrer des Kraftfahrzeugs eine Rückmeldung bzw. ein Feedback ausgegeben werden. Diese Rückmeldung kann beispielsweise in Abhängigkeit von dem Fahrverhalten des Fahrers angepasst werden. Weiterhin ist es möglich, die Intensität der Rückmeldung in Abhängigkeit von der Entfernung des Kraftfahrzeugs zu dem blockierten Radlenkwinkelbereich anzupassen. Hier kann die Intensität mit sich verringerndem Abstand erhöht werden. Die Intensität der Rückmeldung kann auch in Abhängigkeit von dem Lenkmoment, welches der Fahrer aufbringt, angepasst werden. Beispielsweise kann die Intensität mit zunehmendem Lenkmoment erhöht werden. Die Intensität der Rückmeldung kann auch mit zunehmender Geschwindigkeit des Kraftfahrzeugs erhöht werden. Die Intensität der Rückmeldung beschreibt insbesondere das Drehmoment, welches bei dem Lenkeingriff aufgebracht wird. Damit kann der Lenkeingriff zuverlässig an die aktuelle Fahrsituation angepasst werden.

Weiterhin ist es vorteilhaft, wenn in dem maximal vorgebbaren Radlenkwinkelbereich ein freier Radlenkwinkelbereich, für welchen keine Kollision mit dem Objekt droht und welcher an den Warnradlenkwinkelbereich angrenzt, bestimmt wird, und in dem freien Radlenkwinkelbereich ein Einleiten einer kollisionsvermeidenden Maßnahme unterbleibt. Der maximal vorgebbare Radlenkwinkelbereich kann also in den freien Radlenkwinkelbereich, bei dem keine Kollision mit dem Objekt droht, und den blockierten Radlenkwinkelbereich, in dem die Kollision bei Beibehaltung des Radlenkwinkels erfolgt, eingeteilt werden. Zwischen dem freien Radlenkwinkelbereich und dem blockierten Radlenkwinkelbereich wird der Warnradlenkwinkelbereich definiert, für welche eine Warnung an den Fahrer ausgegeben werden kann. Durch die jeweiligen Radlenkwinkelbereiche kann die Kollisionsgefahr beschrieben werden. In Abhängigkeit von der Kollisionsgefahr kann dann die jeweilige erforderliche kollisionsvermeidende Maßnahme eingeleitet werden.

In einer weiteren Ausführung wird die zweite kollisionsvermeidende Maßnahme eingeleitet, falls der Radlenkwinkel von dem freien Radlenkwinkelbereich in den Warnradlenkwinkelbereich geändert wird. Die zweite kollisionsvermeidende Maßnahme kann also nur dann eingeleitet werden, falls ein aktueller Radlenkwinkel, der sich in dem freien Radlenkwinkelbereich befindet, in einen Radlenkwinkel, der sich in dem Warnradlenkwinkelbereich befindet, geändert wird. Die Warnung ist also nur in eine Richtung, nämlich von einer kollisionsfreien Trajektorie in den Warnradlenkwinkelbereich, aber beispielsweise nicht von einer kollidierenden Trajektorie in den Warnradlenkwinkelbereich vorgesehen. Es kann auch vorgesehen sein, dass die zweite kollisionsvermeidende Maßnahme eingeleitet, falls der Radlenkwinkel von dem blockierten Radlenkwinkelbereich in den Warnradlenkwinkelbereich geändert wird. Dies kann beispielsweise nach einem durchgeführten Lenkeingriff als erste kollisionsvermeidende Maßnahme der Fall sein.

Ein erfindungsgemäßes Fahrerassistenzsystem für ein Kraftfahrzeug ist zum Durchführen eines erfindungsgemäßen Verfahrens ausgelegt. Das Kraftfahrzeug kann beispielsweise mehrere Sensoren umfassen, mit denen die relative Lage zwischen dem Kraftfahrzeug und dem Objekt bestimmt werden kann. Ferner kann das Fahrerassistenzsystem eine Steuereinrichtung aufweisen, die auf Grundlage der relativen Lage zwischen dem Kraftfahrzeug und dem Objekt, der aktuellen Fahrzeuggeschwindigkeit und/oder der Reaktionszeit den maximal vorgebbaren Lenkwinkelbereich bestimmen kann. Ferner können mit der Steuereinrichtung der blockierte Radlenkwinkelbereich, der Warnradlenkwinkelbereich und/oder der freie Lenkwinkelbereich bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: eine schematische Darstellung des Kraftfahrzeugs und eines Objekts zur Erläuterung einer Bestimmung des maximal vorgebbaren Radlenkwinkelbereichs;
- Fig. 3: eine Darstellung des Kraftfahrzeugs und des Objekts gemäß einer weiteren Ausführungsform; und
- Fig. 4: eine weitere schematische Darstellung des Kraftfahrzeugs und eines Objekts.

In den Figuren werden gleiche und funktionsgleiche Elemente mit den gleichen Bezugszeichen versehen.

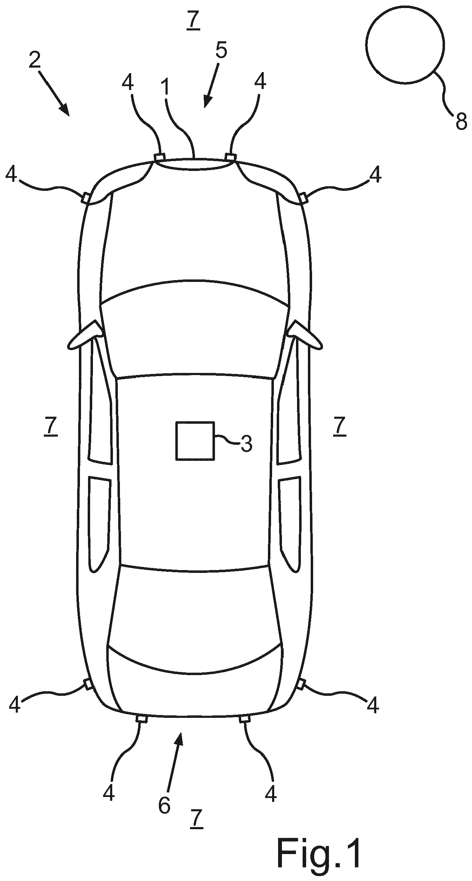

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches den Fahrer beim Führen des Kraftfahrzeugs 1 unterstützt.

Das Fahrerassistenzsystem 2 umfasst eine Mehrzahl von Sensoren 4, welche verteilt an dem Kraftfahrzeug 1 angeordnet sind. Dabei sind vier der Sensoren 4 im Frontbereich 5 und vier der Sensoren 4 in einem Heckbereich 6 des Kraftfahrzeugs 1 angeordnet. Bei den Sensoren 4 kann es sich beispielsweise um Ultraschallsensoren handeln. Mit Hilfe der Sensoren 4 können Objekte 8 in einer Umgebung 7 des Kraftfahrzeugs 1 erfasst werden. Das Fahrerassistenzsystem 2 umfasst ferner eine Steuereinrichtung 3, welche zur Datenübertragung mit den Sensoren 4 verbunden ist. Entsprechende Datenleitungen sind vorliegend der Übersichtlichkeit halber nicht dargestellt. Mit Hilfe der Steuereinrichtung 3 können die Daten, die mit den Sensoren 4 bereitgestellt werden, ausgewertet werden.

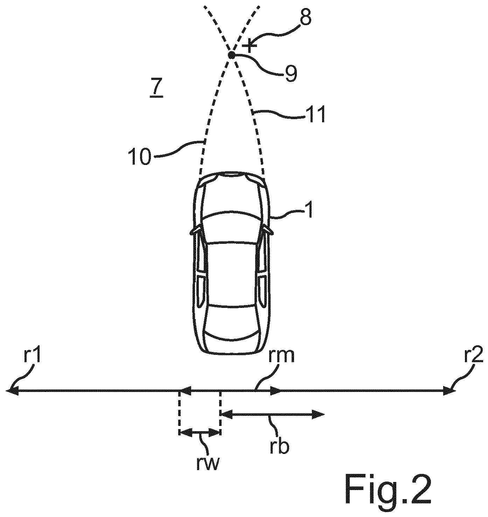

Mit Hilfe des Fahrerassistenzsystems 2 soll eine Kollision zwischen dem Kraftfahrzeug 1 und dem Objekt 8 verhindert werden. Hierzu wird zunächst ein maximal vorgebbarer Radlenkwinkelbereich rm bestimmt. Dies ist in Fig. 2 schematisch veranschaulicht. Fig. 2 zeigt das Kraftfahrzeug 1 in dessen Umgebung 7 sich das Objekt 8 befindet. Zudem wird die aktuelle Geschwindigkeit des Kraftfahrzeugs 1 und ein aktueller Radlenkwinkel des Kraftfahrzeugs 1 ermittelt. Der Radlenkwinkel beschreibt einen Winkel der lenkbaren Räder des Kraftfahrzeugs 1. Ferner ist in der Steuereinrichtung 3 eine vorbestimmte Reaktionszeit hinterlegt. Diese Reaktionszeit kann eine Reaktionszeit eines Fahrers des Kraftfahrzeugs beschreiben. Alternativ dazu kann die Reaktionszeit eine Reaktionszeit des Fahrerassistenzsystems beschreiben.

Zunächst soll der maximal vorgebbare Radlenkwinkelbereich rm bestimmt werden. Dieser maximal Radlenkwinkelbereich rm beschreibt diejenigen Radlenkwinkel, welche bei der aktuellen Fahrsituation eingestellt werden können. Grundsätzlich kann der Radlenkwinkel zwischen einem ersten maximal möglichen Radlenkwinkel r1 und einem zweiten maximal Radlenkwinkel r2 verändert werden. Der maximal mögliche Radlenkwinkel r1 ergibt sich bei einem Volleinschlag der lenkbaren Räder nach links und der maximal mögliche Radlenkwinkel r2 ergibt sich bei einem maximalen Einschlag der lenkbaren Räder nach rechts. Zur Bestimmung des maximal vorgebbaren Radlenkwinkels rm wird ein virtuelles Objekt 9 herangezogen, welches sich in Fahrtrichtung vor dem Kraftfahrzeug 1 befindet und für welches bei Beibehaltung der Fahrtrichtung eine Kollision mittig mit der Front des Kraftfahrzeugs 1 droht. Dieses virtuelle Objekt 9 wird so bestimmt, dass die Kollision nach der Reaktionszeit droht. Ausgehend von diesem virtuellen Objekt 9 können dann Bewegungsbahnen 10 und 11 bestimmt werden, welche jeweils eine Bewegung des Kraftfahrzeugs 1 an dem virtuellen Objekt 9 vorbei beschreiben. Die Bewegungsbahn 10 beschreibt die Bewegung einer linken Frontseite des Kraftfahrzeugs 1 bei der Einstellung eines zweiten maximal vorgebbaren Radlenkwinkels r2. Die Bewegungsbahn 11 beschreibt die Bewegung der rechten Frontseite des Kraftfahrzeugs 1 bei der Einstellung des ersten maximal vorgebbaren Radlenkwinkels r1. Aus dem ersten und dem zweiten maximal vorgebbaren Radlenkwinkel r1, r2 kann dann der maximal vorgebbare Radlenkwinkelbereich rm bestimmt werden, der sich zwischen dem ersten und dem zweiten maximal vorgebbaren Radlenkwinkel r1, r2 erstreckt.

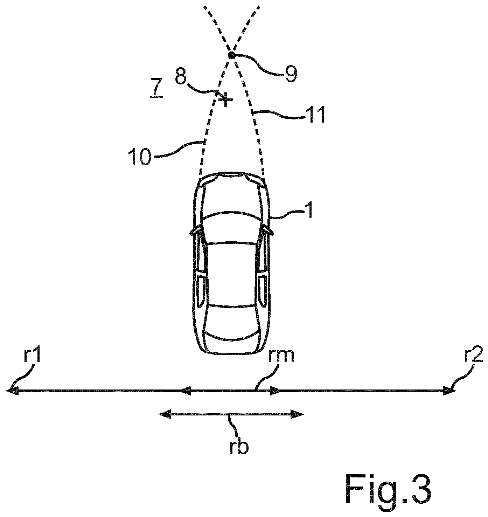

Darüber hinaus wird ein blockierter Radlenkwinkelbereich rb bestimmt, welche diejenigen Radlenkwinkel beschreibt, bei deren Einstellung eine Kollision mit dem Objekt 8 droht. Der blockierte Radlenkwinkelbereich rb kann anhand der relativen Lage zwischen dem Kraftfahrzeug 1 und dem Objekt 8 bestimmt werden. Bei dem Beispiel von Fig. 2 ergibt sich für den maximalen vorgebbaren Radlenkwinkelbereich rm, welcher von dem blockierten Radlenkwinkelbereich rb verschieden ist, die Möglichkeit, dem Objekt 8 auszuweichen und somit eine Kollision zwischen dem Kraftfahrzeug 1 und dem Objekt 8 zu verhindern. Im Gegensatz hierzu zeigt Fig. 3 ein Beispiel, bei dem der blockierte Radlenkwinkelbereich rb größer ist als der maximal vorgebbare Radlenkwinkelbereich rm. Vorliegend liegt der maximal vorgebbaren Radlenkwinkelbereich rm vollständig innerhalb des blockierten Radlenkwinkelbereichs rb. In diesem Fall kann eine Kollision zwischen dem Kraftfahrzeug 1 und dem Objekt 8 nicht mehr verhindert werden.

Vorliegend soll eine kollisionsverhindernde Maßnahme in Abhängigkeit von dem Radlenkwinkelbereich bestimmt werden. Bei dem Beispiel von Fig. 3 befindet sich der aktuelle Radlenkwinkel des Kraftfahrzeugs 1 in dem blockierten Radlenkwinkelbereich rb und somit kann eine Kollision nicht mehr verhindert werden. In diesem Fall wird als erste kollisionsverhindernde Maßnahme eine Bremsung oder ein Eingriff in die Lenkung durchgeführt. Hierzu kann mit Hilfe der Steuereinrichtung 3 bzw. des Fahrerassistenzsystems ein Eingriff in die Bremsen oder die Lenkung des Kraftfahrzeugs 1 durchgeführt werden.

Bei dem Beispiel von Fig. 2 kann überprüft werden, ob sich ein aktueller Radlenkwinkel in einem vorbestimmten Warnradlenkwinkelbereich rw befindet. Dieser

Warnradlenkwinkelbereich rw beschreibt Radlenkwinkel, bei deren Einstellung keine Kollision mit dem Objekt 8 droht, aber eine geringfügige Änderung des Radlenkwinkels bzw. des Lenkwinkels zu einer Kollision mit dem Objekt 8 führen kann. Falls der aktuelle Radlenkwinkel in diesem Warnradlenkwinkelbereich rw liegt, kann eine zweite kollisionsvermeidende Maßnahme eingeleitet werden. Beispielsweise kann eine Warnung an den Fahrer des Kraftfahrzeugs 1 ausgegeben werden. Alternativ dazu kann ein Eingriff in die Lenkung des Kraftfahrzeugs 1 mit Hilfe des Fahrerassistenzsystems 2 bzw. der Steuereinrichtung 3 durchgeführt werden. Somit kann der Fahrer des Kraftfahrzeugs 1 davon abgehalten werden, die Lenkung so zu betätigen, dass der aktuelle Radlenkwinkel in dem blockierten Radlenkwinkelbereich rb liegt.

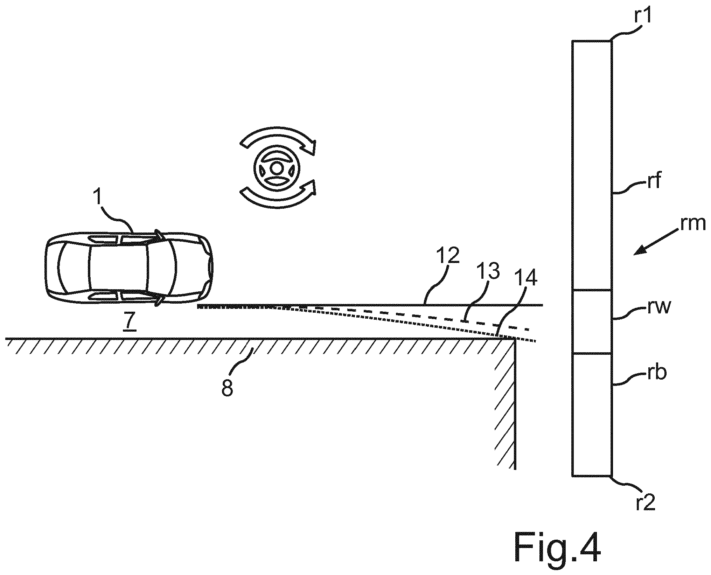

Fig. 4 zeigt eine schematische Darstellung des Kraftfahrzeugs 1 und eines Objekts 8 in der Umgebung 7 des Kraftfahrzeugs. Auch hier wird der maximal vorgebbare Radlenkwinkel rm für die aktuelle Fahrsituation bestimmt. Hierbei wird zudem ein freier Radlenkwinkelbereich rf definiert, in dem keine Kollision mit dem Objekt 8 droht. Dieser freie Radlenkwinkelbereich rf ist einer ersten Trajektorie 12 zugeordnet. Wenn sich der aktuelle Radlenkwinkel des Kraftfahrzeugs 1 in dem freien Radlenkwinkelbereich rf befindet bzw. sich das Kraftfahrzeug 1 entlang der ersten Trajektorie 12 bewegt, wird keine kollisionsverhindernde Maßnahme durchgeführt. Wenn sich der aktuelle Radlenkwinkel des Kraftfahrzeugs 1 in dem blockierten Radlenkwinkelbereich rb befindet bzw. sich das Kraftfahrzeug 1 entlang der dritten Trajektorie 14 bewegt, wird als erste kollisionsverhindernde Maßnahme eine Bremsung und/oder ein Lenkeingriff durchgeführt.

Falls sich der aktuelle Radlenkwinkel in dem Warnradlenkwinkelbereich rw befindet bzw. sich das Kraftfahrzeug 1 entlang der zweiten Trajektorie 13 bewegt, kann eine optische, akustische und/oder haptische Rückmeldung bzw. Warnung an den Fahrer ausgegeben werden. Diese Warnung bzw. dieser Hinweis kann den Fahrer darauf hinweisen, wie er sein Lenkverhalten anzupassen hat. Vorliegend kann der Warnradlenkwinkelbereich rw durch einen zusätzlichen Sicherheitsabstand, der beispielsweise auf Grundlage des Radlenkwinkels bestimmt wird, ermittelt werden. Als Rückmeldung kann auch ein Eingriff in die Lenkung vorgenommen werden, falls sich der aktuelle Radlenkwinkel in dem Warnradlenkwinkelbereich rw befindet. Hierbei kann eine Lenkbewegung des Fahrers erfasst werden. Wenn eine Lenkbewegung in Richtung des blockierten Radlenkwinkelbereichs rb erkannt wird, kann ein Lenkmoment aufgebracht werden, welches entgegengesetzt zu dieser Lenkbewegung gerichtet ist. Somit kann auf zuverlässige Weise verhindert werden, dass der Fahrer das Kraftfahrzeug 1 in den blockierten Radlenkwinkelbereich rb lenkt.

## Patentansprüche

1. Verfahren zur Vermeidung einer Kollision eines Kraftfahrzeugs (1) mit einem Objekt (8), bei welchem das Objekt (8) in einer Umgebung (7) des Kraftfahrzeugs (1) erfasst wird, eine relative Lage zwischen dem Kraftfahrzeug (1) und dem Objekt (8) bestimmt wird und in Abhängigkeit von der relativen Lage zwischen dem Kraftfahrzeug (1) und dem Objekt (8) zumindest eine kollisionsvermeidende Maßnahme bestimmt wird, wobei
ein maximal vorgebbarer Radlenkwinkelbereich (rm) bestimmt wird, in dem maximal vorgebbaren Radlenkwinkelbereich (rm) anhand der relativen Lage zwischen dem Kraftfahrzeug (1) und dem Objekt (8) ein blockierter Radlenkwinkelbereich (rb), für welchen die Kollision mit dem Objekt (8) droht und vermeidbar ist, und ein Warnradlenkwinkelbereich (rw), für welchen keine Kollision mit dem Objekt (8) droht und welcher an den blockierten Radlenkwinkelbereich (rb) angrenzt, bestimmt werden, für den blockierten Radlenkwinkelbereich (rb) eine erste kollisionsvermeidende Maßnahme und für den Warnradlenkwinkelbereich (rw) eine zweite kollisionsvermeidende Maßnahme bestimmt werden, wobei die zweite kollisionsvermeidende Maßnahme eingeleitet wird, falls der aktuelle Radlenkwinkel in dem Warnradlenkwinkelbereich (rw) liegt und wobei innerhalb des Warnradlenkwinkelbereichs (rw) eine von dem Fahrer durchgeführte Lenkbewegung erfasst wird und falls die erfasste Lenkbewegung in Richtung des blockierten Radlenkwinkelbereichs (rb) gerichtet ist, als die zweite kollisionsvermeidende Maßnahme ein Lenkeingriff durchgeführt wird, welcher entgegengesetzt zu der Lenkbewegung gerichtet ist.

2. Verfahren nach Anspruch 1,
**dadurch gekennzeichnet, dass**
der maximal vorgebbare Radlenkwinkelbereich (rm) anhand einer vorbestimmten Reaktionszeit und/oder anhand einer aktuellen Geschwindigkeit des Kraftfahrzeugs (1) bestimmt wird.

3. Verfahren nach Anspruch 1 oder 2,
**dadurch gekennzeichnet, dass**
als die erste kollisionsvermeidende Maßnahme eine Bremsung und/oder ein Lenkeingriff bestimmt wird und die erste kollisionsvermeidende Maßnahme eingeleitet wird, falls ein aktueller Radlenkwinkel in dem blockierten Radlenkwinkelbereich (rb) liegt.

4. Verfahren nach einem der vorhergehenden Ansprüche,
**dadurch gekennzeichnet, dass**
eine Intensität des Lenkeingriffs in Abhängigkeit von einer Entfernung des Kraftfahrzeugs (1) zu dem blockierten Radlenkwinkelbereich (rb), eines bei der Lenkbewegung aufgebrachten Lenkmoments und/oder der aktuellen Geschwindigkeit des Kraftfahrzeugs (1) bestimmt wird.

5. Verfahren nach einem der vorhergehenden Ansprüche,
**dadurch gekennzeichnet, dass**
in dem maximal vorgebbaren Radlenkwinkelbereich (rm) ein freier Radlenkwinkelbereich (rf), für welchen keine Kollision mit dem Objekt (8) droht und welcher an den Warnlenkwinkelbereich (rw) angrenzt, bestimmt wird und in dem freien Radlenkwinkelbereich (rf) ein Einleiten einer kollisionsvermeidende Maßnahme unterbleibt.

6. Verfahren nach Anspruch 5,
**dadurch gekennzeichnet, dass**
die zweite kollisionsvermeidende Maßnahme eingeleitet wird, falls der Radlenkwinkel von dem freien Radlenkwinkelbereich (rf) in den Warnradlenkwinkelbereich (rw) geändert wird.

7. Fahrerassistenzsystem (2) für ein Kraftfahrzeug (1), welches zum Durchführen
eines Verfahrens nach einem der vorhergehenden Ansprüche ausgelegt ist, wobei das Fahrerassistenzsystem (2) Sensoren (4) und eine Steuerungseinrichtung (3) umfasst.

8. Kraftfahrzeug (1) mit einem Fahrerassistenzsystem (2) nach Anspruch 7.

## Claims

1. Method for avoiding a collision of a motor vehicle (1) with an object (8), in which the object (8) is detected in surroundings (7) of the motor vehicle (1), a relative position between the motor vehicle (1) and the object (8) is determined and the relative position between the motor vehicle (1) and the object (8) is taken as a basis for determining at least one collision-avoiding measure, wherein
a maximum predefinable wheel steering angle range (rm) is determined, a blocked wheel steering angle range (rb), for which the collision with the object (8) is a threat and is avoidable, and a warning wheel steering angle range (rw), for which a collision with the object (8) is not a threat, and which adjoins the blocked wheel steering angle range (rb), are determined in the maximum predefinable wheel steering angle range (rm) on the basis of the relative position between the motor vehicle (1) and the object (8), a first collision-avoiding measure is determined for the blocked wheel steering angle range (rb) and a second collision-avoiding measure is determined for the warning wheel steering angle range (rw), the second collision-avoiding measure being initiated if the current wheel steering angle is in the warning wheel steering angle range (rw), and wherein a steering movement performed by the driver within the warning wheel steering angle range (rw) is detected and, if the detected steering movement is in the direction of the blocked wheel steering angle range (rb), the second collision-avoiding measure performed is a steering intervention in the opposite direction to the steering movement.

2. Method according to Claim 1,
**characterized in that**
the maximum predefinable wheel steering angle range (rm) is determined on the basis of a predetermined reaction time and/or on the basis of a current speed of the motor vehicle (1).

3. Method according to Claim 1 or 2,
**characterized in that**
the first collision-avoiding measure determined is braking and/or a steering intervention, and the first collision-avoiding measure is initiated if a current wheel steering angle is in the blocked wheel steering angle range (rb).

4. Method according to one of the preceding claims, **characterized in that**
an intensity of the steering intervention is determined according to a distance of the motor vehicle (1) from the blocked wheel steering angle range (rb), a steering torque applied during the steering movement and/or the current speed of the motor vehicle (1).

5. Method according to one of the preceding claims, **characterized in that**
a permitted wheel steering angle range (rf), for which a collision with the object (8) is not a threat, and which adjoins the warning steering angle range (rw), is determined in the maximum predefinable wheel steering angle range (rm), and a collision-avoiding measure is not initiated in the permitted wheel steering angle range (rf) .

6. Method according to Claim 5,
**characterized in that**
the second collision-avoiding measure is initiated if the wheel steering angle is changed from the permitted wheel steering angle range (rf) to the warning wheel steering angle range (rw).

7. Driver assistance system (2) for a motor vehicle (1), designed to carry out a method according to one of the preceding claims, wherein the driver assistance system (2) comprises sensors (4) and a control device (3) .

8. Motor vehicle (1) having a driver assistance system (2) according to Claim 7.

## Revendications

1. Procédé pour éviter une collision d'un véhicule automobile (1) avec un objet (8), avec lequel l'objet (8) est détecté dans un environnement (7) du véhicule automobile (1), une position relative entre le véhicule automobile (1) et l'objet (8) est déterminée et au moins une mesure d'évitement de collision est déterminée en fonction de la position relative entre le véhicule automobile (1) et l'objet (8),
une plage d'angles de braquage de roue maximale (rm) qui peut être prédéfinie étant déterminée, une plage d'angles de braquage de roue bloquée (rb), pour laquelle la collision avec l'objet (8) menace et peut être évitée, et une plage d'angles de braquage de roue d'avertissement (rw), pour laquelle aucune collision avec l'objet (8) ne menace et qui est adjacente à la zone angulaire de braquage de roue bloquée (rb), étant déterminées, à l'aide de la position relative entre le véhicule automobile (1) et l'objet (8), dans la plage d'angles de braquage de roue maximale (rm) qui peut être prédéfinie, une première mesure d'évitement de collision étant déterminée pour la plage d'angles de braquage de roue bloquée (rb) et une deuxième mesure d'évitement de collision pour la plage d'angles de braquage de roue d'avertissement (rw), la deuxième mesure d'évitement de collision étant initiée dans le cas où l'angle de braquage actuel des roues se situe dans la plage d'angles de braquage d'avertissement (rw) et un mouvement de braquage effectué par le conducteur étant détecté à l'intérieur de la plage d'angles de braquage d'avertissement (rw) et, dans le cas où le mouvement de braquage détecté est dirigé vers la plage d'angles de braquage de roue bloquée (rb), une intervention de direction, qui est dirigée dans le sens opposé au mouvement de braquage, étant effectuée en tant que deuxième mesure d'évitement de collision.

2. Procédé selon la revendication 1,
**caractérisé en ce que**
la plage d'angles de braquage de roue maximale (rm) qui peut être prédéfinie est déterminée à l'aide d'un temps de réaction prédéterminé et/ou à l'aide d'une vitesse actuelle du véhicule automobile (1).

3. Procédé selon la revendication 1 ou 2,
**caractérisé en ce que**
un freinage et/ou une intervention de direction sont déterminés en tant que première mesure d'évitement de collision et la première mesure d'évitement de collision est initiée dans le cas où un angle de braquage de roue actuel se trouve dans la plage d'angles de braquage de roue bloquée (rb).

4. Procédé selon l'une quelconque des revendications précédentes,
**caractérisé en ce que**
une intensité de l'intervention de direction est déterminée en fonction d'une distance du véhicule automobile (1) par rapport à la plage d'angles de direction de roue bloquée (rb), d'un couple de direction appliqué lors du mouvement de direction et/ou de la vitesse actuelle du véhicule automobile (1).

5. Procédé selon l'une quelconque des revendications précédentes,
**caractérisé en ce que**
dans la plage d'angle de braquage de roue maximale (rm) qui peut être prédéfinie, une plages d'angle de braquage de roue libre (rf), pour laquelle aucune collision avec l'objet (8) ne menace et qui est adjacente à la plage d'angle de braquage d'avertissement (rw), est déterminée, et dans la plage d'angles de braquage de roue libre (rf), il y a abstention d'une initiation d'une mesure d'évitement de collision.

6. Procédé selon la revendication 5,
**caractérisé en ce que**
la deuxième mesure d'évitement de collision est initiée dans le cas où l'angle de braquage de roue est modifié de la plage d'angles de braquage de roue libre (rf) à la plage d'angles de braquage de roue d'avertissement (rw).

7. Système d'assistance au conducteur (2) pour un véhicule automobile (1), qui est conçu pour mettre en œuvre un procédé selon l'une des revendications précédentes, le système d'assistance au conducteur (2) comprenant des capteurs (4) et un dispositif de commande (3) .

8. Véhicule automobile (1) comprenant un système d'aide à la conduite (2) selon la revendication 7.
